Europäisches Patentamt

European Patent Office

Office européen des brevets

(11) Publication number: **0 170 442**
**A2**

(12) # EUROPEAN PATENT APPLICATION

(21) Application number: **85304876.7**

(22) Date of filing: **09.07.85**

(51) Int. Cl.⁴: **G 06 F 15/40**

(30) Priority: **31.07.84 US 636469**

(43) Date of publication of application:
**05.02.86 Bulletin 86/6**

(84) Designated Contracting States:
**DE FR GB SE**

(71) Applicant: **International Standard Electric Corporation**
**320 Park Avenue**
**New York New York 10022(US)**

(72) Inventor: **Cotton, John Michael**
**Sasqua Road**
**East Norwalk Connecticut 06855(US)**

(74) Representative: **Vaufrouard, John Charles**
**ITT Patent Department UK Maidstone Road Foots Cray**
**Sidcup KentDA14 5HT(GB)**

(54) A method for searching sparse databases using an associative technique.

(57) A method is provided for searching sparse databases using associative searching techniques wherein portions of the database are simultaneously searched by comparing a selected value to be searched for with values stored within the portions. Each portion of the database is further refined into sub-portions said sub-portions being simultaneously searched by comparing the values stored therein with the selected value. Searching performance is improved in both the area of search speed and the ease with which the stored values may be updated. The method uniquely takes advantage of the architecture of an associative array processor to provide the simultaneous searching.

Croydon Printing Company Ltd.

## A METHOD FOR SEARCHING SPARSE DATABASES
## USING AN ASSOCIATIVE TECHNIQUE

The present invention relates generally to database searching and more particularly to an associative technique for searching sparse databases using an associative array processor.

Searching through a sparsely populated database such as a list of items is an activity which occupies a significant portion of many programs and algorithms. An example of a sparsely populated list is that of a personnel file wherein the first 8 letters of an employees name is used as the index to the file. In such a case there are $26^8$ possibilities of which perhaps only 2,000 may be used.

There are a number of techniques known to those skilled in the art that may be used for searching sparsely populated lists.

A linear search may be performed wherein the entries to be searched are placed in monotonic order and the value sought is compared successively with the elements of the table until a match is found or the entries change from being smaller than the value sought to being larger than said value. This method may be satisfactory for small tables but the average search time of N/2 (for a table of N entries) quickly becomes unacceptable. For very large tables in which all the entries are on discs this method becomes unthinkable. Equally impractical would be the use of a binary search for such a large table for the same reason that it would require very many disc accesses and consequently would be a very slow search.

Hash coding could also be used for searching sparse lists, and in such a case the values to be searched for are subjected to a randomising algorithm. The result of this calculation is used as an address to an area of storage (known as a bucket) in which the searched for value should be found. In general, the bucket will contain other items besides the ones sought and a further search, usually a linear search, is required to complete the search procedure.

The effectiveness of the hash coding technique depends upon; the effectiveness of the randomising algorithm in distributing the items evenly over the buckets, the number of buckets provided relative to the number of items to be accessed, the time it takes to compute the randomising function, the size of the buckets and the action taken when a bucket overflows.

The average time taken to find a given value is the time to compute the randomising function (the more effective it is the longer it may be expected to take) plus disc access time and some proration of the linear search time for the bucket and its overflow. Handling the overflow usually involves additional disc accesses.

Experience has shown that hash coding can be very effective for some applications but it is very dependent upon the randomising algorithm and the overflow method both of which are very application specific and subject to experimentation. Thus, it may be said that hash coding is not suitable for general purpose use.

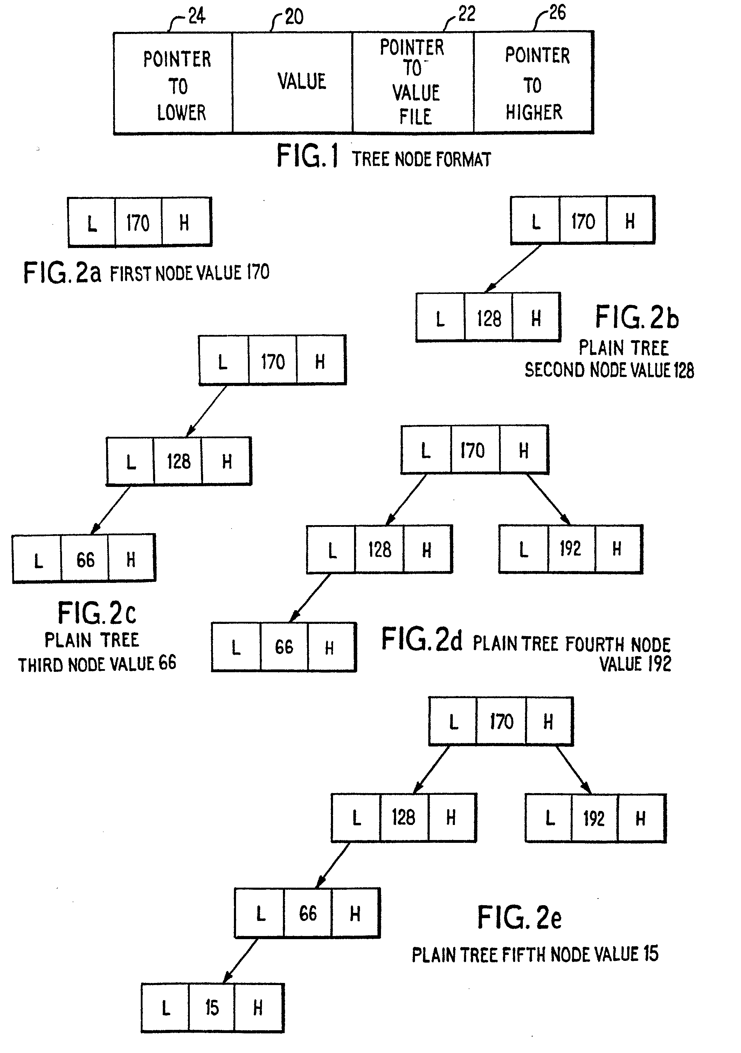

Search tree methods are based on the building of a decision tree through which a search must progress. The simplest of these is a pure binary decision tree which is based on the use of a decision element, or node, of the form shown in Figure 1. Referring to Figure 1 there is seen a representation of a node having a place for storing a value 20, a pointer 22 to the record identified by that value, a pointer 24 to the part of the tree containing smaller values and a pointer 26 to the part of the tree containing larger values. The tree is built up by taking new entries and comparing them with the values already entered as the tree is traversed until either an existing value is matched or a new node is added to the tree. The actions required to build a tree with the sequence of entries 170, 128, 66, 192, and 15, is shown in Figures 2a to 2e. It will be seen that depending on the order in which new values are entered the tree can degenerate into a linked list which is much less effective for searching than a plain ordered table. This is because not only must the value be matched but a linking address must be used which could increase the number of disc accesses due to the unordered arrival of the entries.

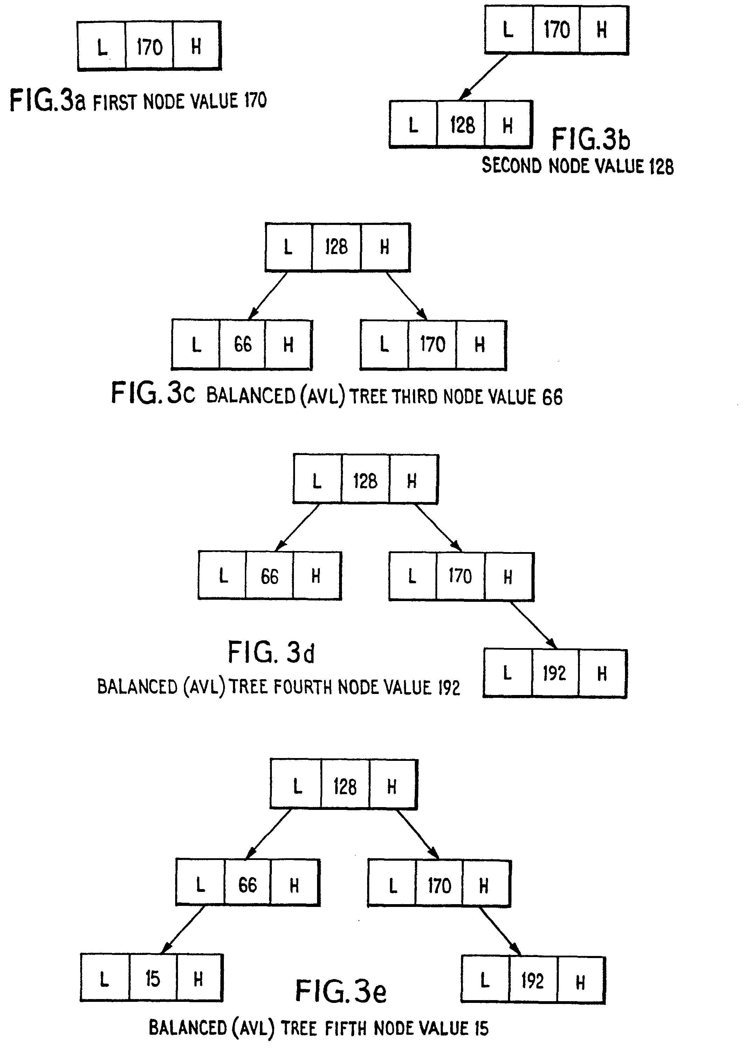

This difficulty is overcome by balancing the tree whenever one branch becomes more than one level deeper than the others. This structure is known as an AVL Tree and the actions to build such a tree with the previous sequence of entries is shown in Figures 3a to 3e. This means that the maximum number of nodes to be searched is ln N/2 where N is the number of entries. The disadvantage is that the table contains N values plus 3N pointers (each is large or larger than the value) and only half of the tree is in the lowest level. For large trees most of the tree will be on discs so that many disc accesses will be required to reach a value at the lowest level. A further problem is that changes and additions to the tree frequently require the tree to be rebalanced, which may need many disc accesses. This rebalancing may only be a nuisance if the tree is quite stable, but can be a major problem if changes are frequent.

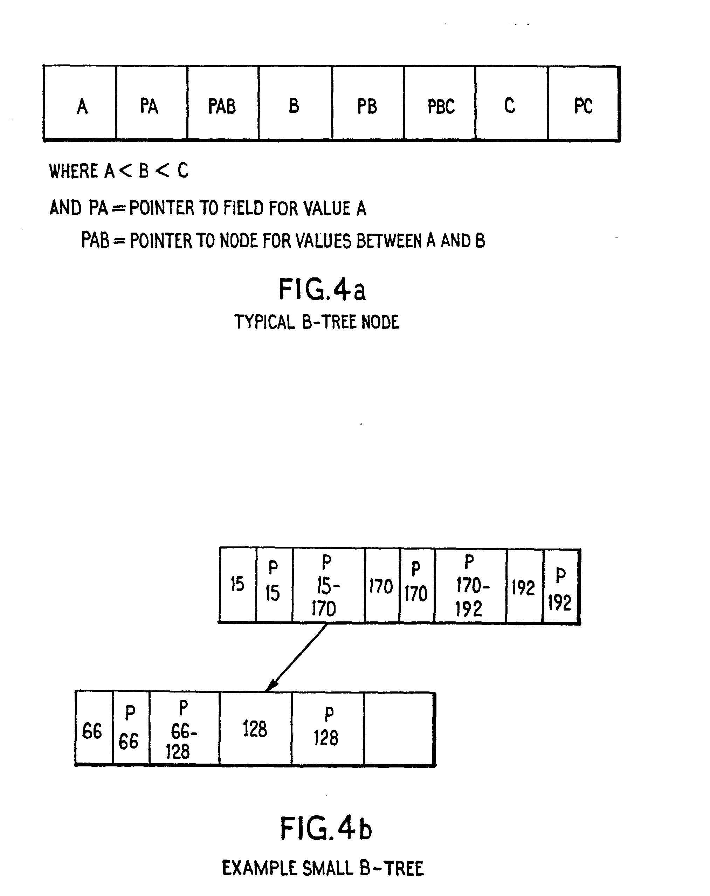

An extension of the search tree technique is known as B-TREES wherein the tree has nodes containing many values. Each value $x(i)$ in node X will have a pointer to the data file for which it is the index, and also a pointer for each interval $x(i)$ to $x(i + 1)$ to the rest of the tree which lies in that interval. The values of $x(i)$ from $x(0)(min)$ to $x(j)(max)$ must increase monotonically. An illustration of the node of this type is shown in Figure 4a with a small B-TREE shown in Figure 4b using the previous sequence of values. The positions of values in the nodes may need reordering as new entries are made and they will need rebalancing from time to time. The advantage of this structure is that only $(1/j)$th of the storage is used in the path to reach the lowest level of the tree. Even for very large trees it becomes possible to keep all but the lowest level in fast storage. The amount of storage used in the tree is also reduced since for N entries there will be only N values plus slightly less than 2N pointers. The remaining problems are those of reordering the values and the nodes and rebalancing the tree for changes, and (for sequential processors) the linear search through the values in each node traversed during a search. Even this later technique may be rendered inefficient by the disc access time for entries in the lowest level.

The present invention contemplates a method of searching sparse databases using associative searching techniques for achieving improved performance of B-TREES. The performance is improved in both the area of search speed and the ease with which the tree may be updated. The method uniquely takes advantage of a particular architecture which supports the associative searching technique which architecture is known as an associative array processor or AAP.

The present invention seeks to provide a method of searching a sparse database wherein the speed of search is increased.

According to one aspect of the invention there is provided a method of searching for a selected value in a sparsely occupied database in which similar values are stored, using an associative array processor, the method using associative matching techniques characterised in the steps of selecting a portion of the database to be searched, concurrently searching records contained in said portion of the database, and identifying in the records the selected value or a pointer to another portion of the database within which the selected value should be located.

According to another aspect of the invention there is provided a method of organising a sparsely occupied database for storing a range of values in an associative array processor, the method characterised in the steps of partitioning the range of values to be stored into blocks, identifying for each block a set of upper and lower boundary values for the block, storing the sets as records in a table stored in the database, further partitioning the range of values contained within each of the blocks into sub-blocks, identifying the sets of values for the upper and lower boundaries of each of the sub-blocks, entering the sets of upper and lower boundary values of the sub-blocks of each prior block as records in a set of subsequent tables stored in the database, there being a subsequent table for each prior block, identifying the addresses of the subsequent tables, and entering the addresses of the subsequent tables into the corresponding records contained in the next higher table.

The invention may enable searching whereby the database can be easily updated.

The invention may enable a search whereby the nodes of a search tree are searched in a parallel by an associative searching apparatus.

The invention also includes a database arranged to operate in accordance with the method.

In order that the invention and its various other preferred features may be understood more easily, some embodiments thereof will now be described, by way of example, with reference to the drawings, in which:-

Figure 1 shows diagramatically the structure of a node used in a search tree.

Figures 2a to 2e show diagramatically how a search tree is developed using a sequence of entries.

Figures 3a to 3e show diagramatically how an AVL Tree is built using a sequence of entries.

Figure 4a shows diagramatically the node structure of a B-TREE.

Figure 4b shows diagramatically a small B-TREE.

Figure 5 shows diagramatically an associative array processor.

Figure 6 is a block diagram of an associative array processor.

Figure 7 shows the cell interconnections in an array.

Figure 8 shows a layout for an index file.

Figure 9 shows the condition of an associative array processor at a point within a search.

Figure 10 shows the condition of an associative array processor at a point within a search.

Figure 11 is a table showing RANGE-TREE partitions.

Figure 12 is a table showing a node layout.

Figure 13 shows the condition of an associative array processor at a point within a search.

Figure 14 shows the condition of an associative array processor at a point within a search.

Figure 15 shows the condition of an associative array processor at a point within a search.

Figure 16 shows an example of a two page node table.

Figure 17 is a table showing the relationship between the number of entries, the scope of search values and the depth of the tree.

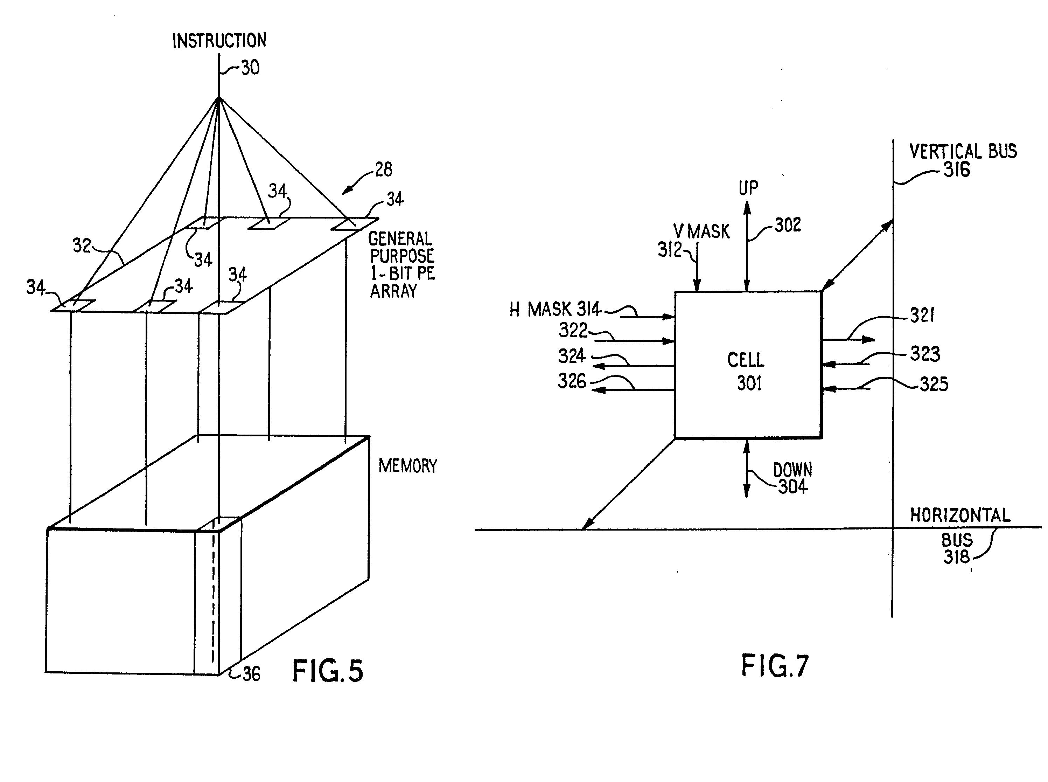

The present invention relates to a method for searching sparse databases using an associative technique. The method is designed for use with a particular type of processor known as an associative processor. The associative-type processor provides the features necessary for achieving the associative searching technique described in this invention. An Associative Processor on which the present method may be practiced is described in the U.S. Patent Application, Serial No. 404,242, filed August 2, 1982 which application is assigned to a common assignee along with this application. There are several essential features that an associative processor must have in order to practice the method of the present invention. The associative processor must be formed of an array which is commonly known as an associative array processor or AAP and example of which is shown schematically in Figure 5. The AAP 28 offers a form of sequential processing in which a single sequential control instruction 30 performs the same computation on many elements of data simultaneously. The AAP is formed of a rectangular array 32 of separate single bit processor cells 34. Each processor cell 34 includes its own arithmetic logic unit (ALU), a set of many single bit registers, and a data memory 36 for storing many bits of information as for example 64K bits. The corresponding single bit registers for the various cells form registers for the AAP.

The cells of the array are interconnected in rows and columns so that cells in a row can process multiple bit data elements and data may be transferred vertically between rows. A means is provided to identify the boundaries of data elements and this may be done by identifying particular bits in a row as being the most significant bit and the least significant bit. The size of the data elements in each row need not be uniform across the array, in particular when the array is to be used for data base applications, the different data elements within a record will need different ranges of values and hence sizes. As previously mentioned all cells within the array simultaneously obey the same instruction; however, it must be possible to disable or mask both rows and columns of cells so that they will not obey instructions.

When a data element has been defined both as to position and size all the contents of the single bit registers associated with each single bit processor cell within that particular data element position may have arithmetic, shift or boolean instructions performed between them. The result of such instructions will include not only the arithmetic or logical result but also an appropriate status indicator such as overflow for add or subtract, zero for match, plus for compare greater than and minus for compare less than, etc. Both the result and the appropriate indicator are made available to be used as a mask for subsequent instructions.

There is a vertical bus for each column providing communication between all cells of the column and an external output register cell. The vertical bus must be established such that only one cell may transmit at any one time. The selection of this cell is accomplished by means of the mask mechanism described above.

Addresses for fetching data from the memory bits are generated in a memory address register. It must be possible to transfer data from the output register to the address register. There is also an input register to contain values for loading into the array or for containing values to be used for searching or comparison. The values stored in this input register is made available to all rows, in the appropriate columns, concurrently so that simultaneous search or comparison may take place in all rows, or the content of the input register transferred to all enabled rows.

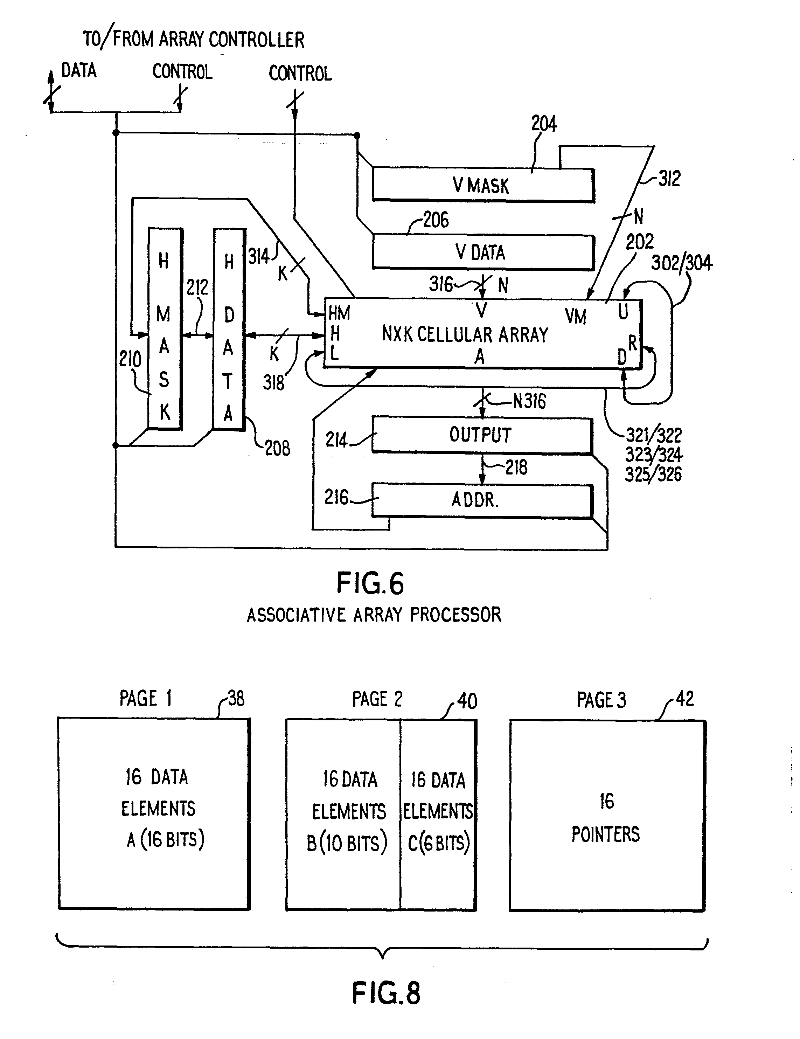

A configuration which provides the above features is shown in Figure 6. An array of cells is shown as 202 and has associated therewith a memory for each cell as previously illustrated in Figure 5.

The interconnections between one cell and its neighbouring cells is shown in Figure 7. The interconnections between cells in a column are shown as 302 and 304 while the interconnection between cells in a row are shown as 321 to 326. The functions of the horizontal connections 321 to 326 between cells in a row are fully described in U.S. Patent Application Serial No. 404,242 previously mentioned. Each cell has a connection 312 to a vertical mask and a connection 314 to a horizontal mask. A vertical bus 316 is also provided for transferring data vertically between cells and the output register 214 and from the input register 206 to the cells in a column while data may be transferred horizontally between cells in a row and the horizontal data/status register 208 using a horizontal bus 318.

Referring again to Figure 6 there is shown a vertical mask register 204 wherein each bit position of the register is connected to the vertical mask connection 312 of each cell of the corresponding column of the array. The vertical mask register 204 provides the vertical mask function previously discussed and in addition provides the means for identifying the boundaries of the data elements in a manner as described in U.S.

Patent Application Serial No. 404,242. A horizontal mask register 210 provides the horizontal mask function and has a plurality of bit positions each connected to line 314 of each cell of the corresponding row of the array 202. When the arithmetic instructions previously mentioned are performed the status indications relating to the results of such instructions on the data of each row must be obtained, transferred and stored. This is accomplished using the horizontal bus 318 to transfer the status indicators to the corresponding bit position of a horizontal data register 208 where they may be stored. Horizontal data register 208 is then connected by connection 212 to the horizontal mask register 210 making the status indicators of the arithmetic instructions available as a horizontal mask. The vertical bus 316 connects the corresponding bits of a vertical data input register 206 to all cells in a column and also connects all cells of the column to the corresponding bits of an output data register 214. Data from the output register 214 may be transferred to an address register 216 by means of connection 218. The function of the input and output register may be combined in one input/output register.

The operation of the AAP previously described and shown in Figures 6 and 7 may be better understood by means of a simple example. Suppose we have an index file and that each record or row contains data elements A, B, C any or all of which may be used to identify a particular stored data block, and a pointer to the location of the stored data block indexed in the file. A suggested format for the index file is shown in Figure 8. Assuming a 16 x 16 array is used, then 3 pages of the array memory will contain 16 records with the format shown. Page 1 identified as 38 includes data elements A each having 16 bits for 16 records there being one row for each record and one column for each of the 16 bits of information in data elements A. Page 2 identified as 40 contains data elements B and C for each of the 16 records with data elements B comprising 10 bits and data elements C comprising 6 bits. Page 3 identified as 42 will contain 16 pointers one for each of the 16 records, to the stored data blocks.

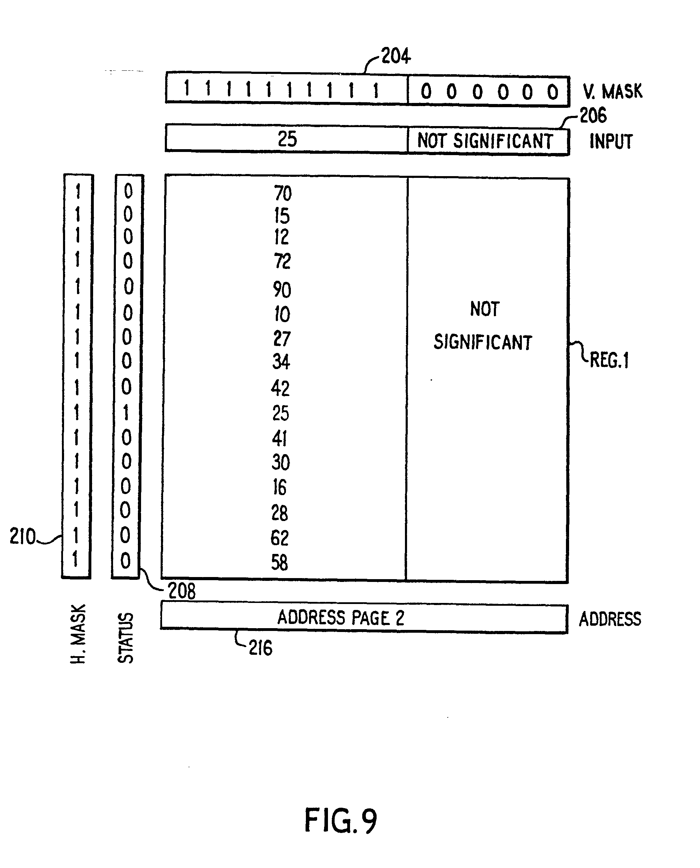

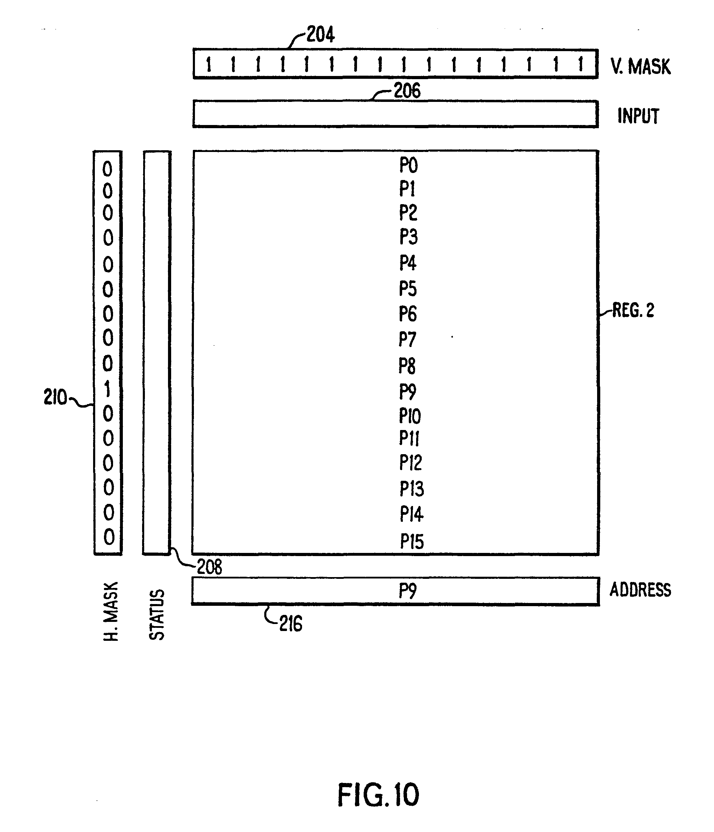

Suppose a page of the index is to be searched for a value 25 in data element B or field B shown as part of page 2 and that only one record in the page contains that value. It should be noted that the values to be searched (Field B) need be in no particular order. The sequence of events, described in relation to Figures 9 and 10, is as follows:

1. The address of page 2 is loaded into the address register 216 and the fields B and C of the 16 records stored on page 2 are fetched for storage into a register for example, register 1 of the set of registers associated with each cell of array 202 as shown in Figure 9.

2. The value to be searched, i.e. 25, is loaded into the most significant 10 bits of the data input register 206 and a mask enabling the most significant 10 bits of the array i.e. corresponding to Field B, is loaded into the vertical mask register 204.

3. A search is performed over the 16 data values in field B for the input data value 25. The row 9 in the example which contains the value 25 matches the searched value 25 and this is indicated by a 1 result in the corresponding bit position in the horizontal data register 208 which is also called the status register.

4. The address register 216 is changed to the address of page 3 containing the pointers, the pointers of page 3 are fetched and stored in a register for example, register 2 of the set of registers.

5. A mask having all 1's is loaded into the vertical mask register 204 to enable all columns of the array and the contents of the status register 208 are transferred to the horizontal mask register 210. The situation at this step of the process is shown in Figure 10.

6. The particular pointer $F9$ found in row 9 is enabled by the horizontal mask register 210 and is transferred over the vertical bus 316 to the output register 214 and thence to the address register 216. This address may now be used to fetch the first page of the stored data block corresponding to entry 25 found in the index.

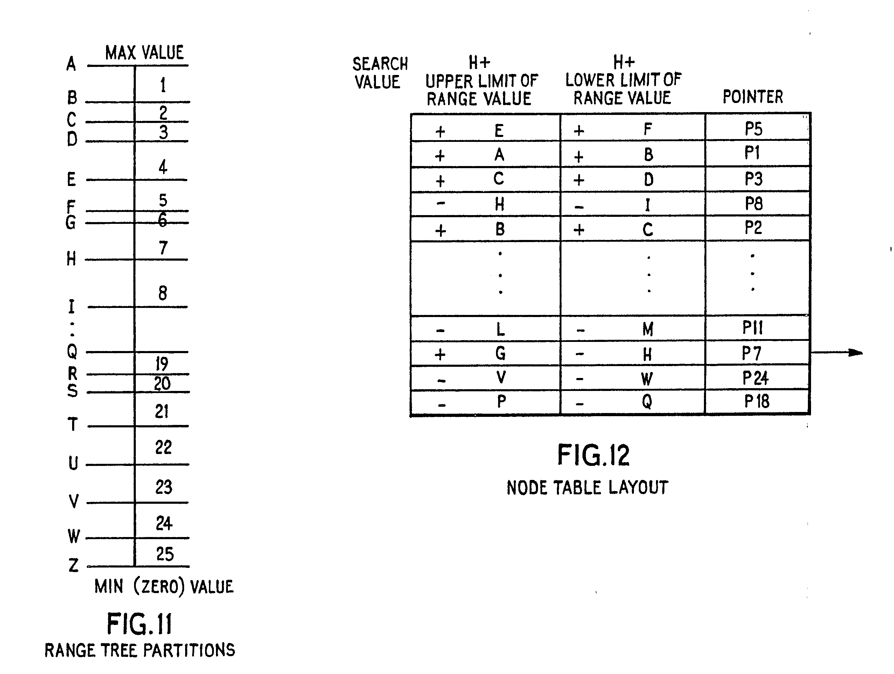

The method of the present invention, which we call RANGE-TREES is an improvement over B-TREES. RANGE-TREES takes advantage of the associative searching features of the AAP described above. If the range of values covered by a node is from $V_0$ to $V_j$, it is divided into j partitions as shown in the table of Figure 11. The partition boundaries are defined by values which are not entries in the table, but in general use only the most significant of the bits needed to define magnitudes in the range $V_0$ to $V_j$. Only at the lowest level of the tree do the values in the node correspond to the entries of the table.

Each sub-range between partitions in the node is specified by its boundaries V(i) and V(i+1) in the node-table, and has attached to it a pointer to the next lower node which will further subdivide the range. The layout of a node-table is shown in Figure 12. As for example, the sub-range between partitions F and E, E being the upper end or higher value of the sub-range, has associated with it a pointer P5. It should be noted that the range specifiers need be in no particular order because they will be searched in parallel by an associative search.

The basic search technique is illustrated in Figure 12 by including therein the results of searching the value H+ which is in the range of H to G. The results of comparing the search value H+ are indicated by the status indicator values shown on each row of the node-table layout. In effect, two comparisons are made for each sub-range. Considering the first row of the table, partition value E is greater than H+ and therefore on the left-hand side the status indicator shows +. Similarly, the partition value F is greater than H+ and the right-hand status indicator shows +. In the fourth row of the table partition value H is less than H+ so the status indicator on the left-hand side shows - while partition value I is also less than H+ thereby resulting in a status indicator of - on the right-hand side. The desired row is the one in which right-hand status shows - thereby being lower than the search value and the left-hand status shows + indicating a value higher than the search value. This combination of status indicators is found in the third from last row and is associated with pointer P7. In this row the search value H+ is lower than G the upper limit of the range and higher than H the lower limit of the range of the row. Pointer P7 is then used to search for and fetch the next lower node-table.

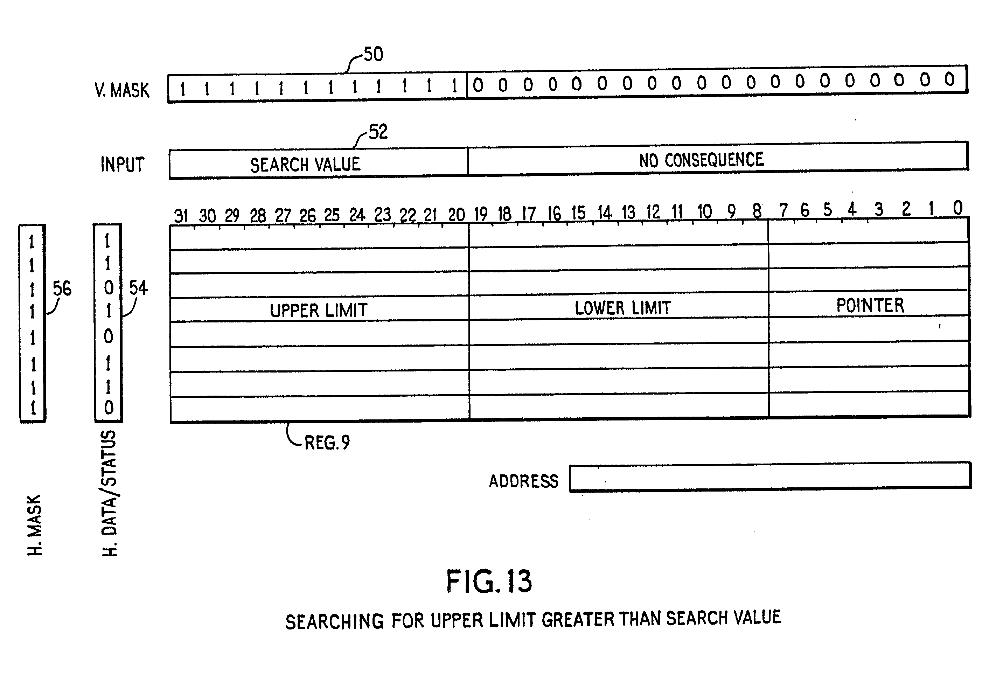

If the first few bits of the magnitudes used to specify the boundaries $V_0$ to $V_j$ are fully decoded in a particular node, they may be dropped from the magnitudes in the lower node, and bits of lower significance appended. The sequence of steps to search one node are described below in conjunction with Figures 13 to 15. This sequence is by way of example and is not the only sequence that will produce the desired result.

1. The format of the records of the node is shown in Figure 13. The sub-range is expressed in 12 bits giving a scope of 4,000. However, this is not necessarily the scope of the whole search since some of the bits may have been decoded at a higher level node and more may be decoded at a lower level node. The array is configured as shown in Figure 13 in the form of a 32 x 32 array with only 8 rows of the array being shown for simplicity. The records shown in Figure 13 are fetched from the memory using a pointer and are loaded into a register of the AAP. Thus, the format of the record shown in Figure 13 shows the information as loaded in a particular register such as register 9 for example.

2. A masked pattern is obtained from memory or another register and is loaded into the vertical mask register 50 as shown in Figure 13. The value to be searched is placed in the input register 52 as shown.

3. The contents of the array are compared for greater-than the contents of the input register which results in the status register 54 containing a 1 for every row which contains a value greater-than or equal to the value in the input register and 0 elsewhere.

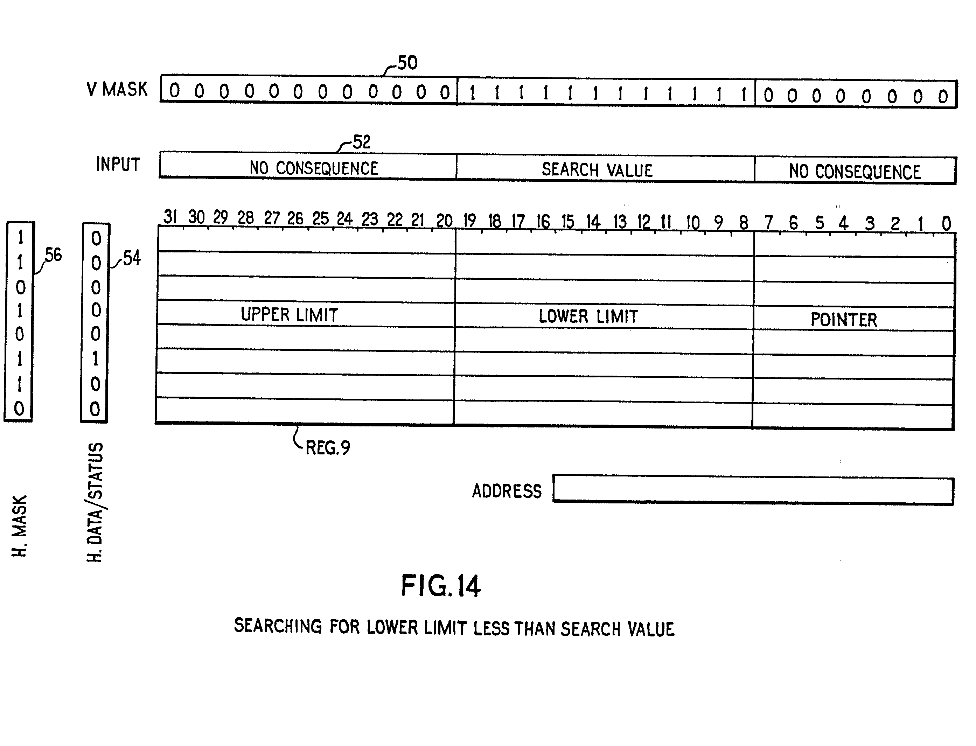

4. The contents of the status register 54 are transferred to the horizontal mask register 56. The horizontal mask register functions to enable only those rows for which it contains a 1. The pattern of the vertical mask 50 and the search value in the input register 52 are both shifted to the right by 12 bits as shown in Figure 14.

5. The contents of the enabled rows of the array are now compared for less-than the search value which results in the status register 54 containing a 1 for those rows which contain a value less-than the search value. As shown in Figure 14 there should be no more than one of these rows and the row containing a 1 in the status register is the row whose pointer indentifies that location of the table containing the next finer subdivision of the range.

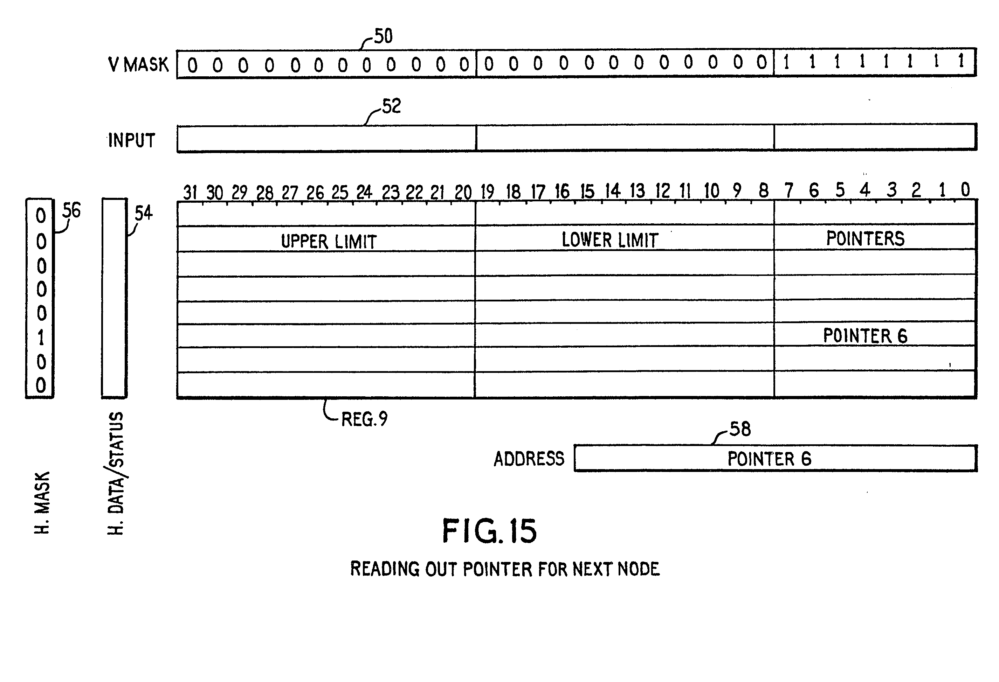

6. The pattern in the status register 54 is transferred to the horizontal mask register 56 and an 8 bit mask is loaded into the vertical mask register 50 in the 8 least significant bits which identify the field of the pointer as indicated in Figure 15.

7. The pointer value identified by both the vertical and horizontal masks i.e. pointer 6 shown in Figure 15, is then transferred to the output register, not shown, and hence to the address register 58 where it is used as an address to fetch the table for the next lower node.

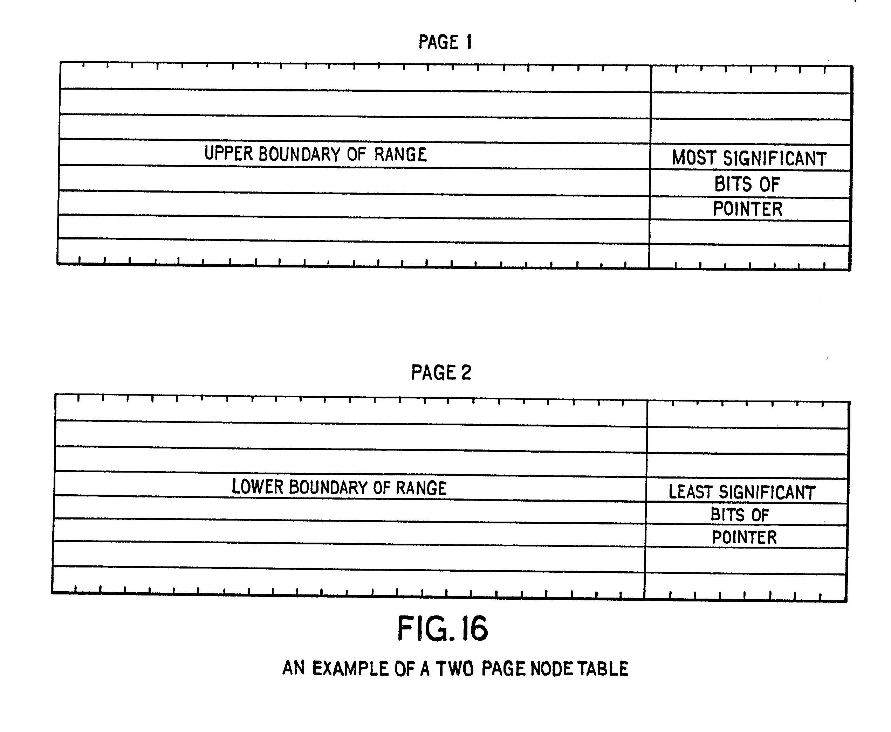

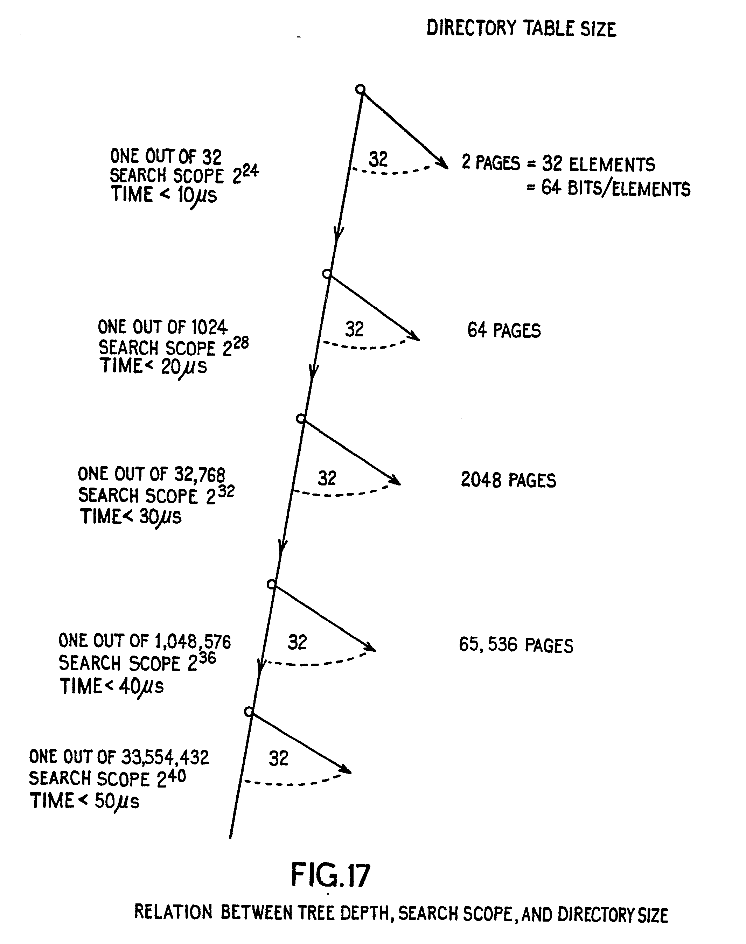

The above sequence describes the steps required to search one node in a RANGE-TREE. The format of the records of the node-table is not critical to the operation. One possible alternative is to use two pages in order to use larger values of boundary magnitudes and hence larger search values. A possible format for a method wherein two pages are used is shown in Figure 16. An indication of the relationship between the number of entries, the scope of the search values and the depth of the tree is shown in Figure 17.

Using the unique method identified as RANGE-TREES provides several advantages over the more conventional B-TREES. A search of a node is performed in parallel by associative means and hence is much faster. This is of particular importance where the whole database is held in main memory. The RANGE-TREES method will have less of an impact where disk access times dominate. It takes less than 10 microseconds per node to perform the search using the RANGE-TREES technique.

Changes and additions to the file are much easier to perform when using RANGE-TREES. Changes and additions are facilitated because the entries in a node do not have to be in any particular order nor does the tree have to be rebalanced. Deletions of entries which occur always at the lowest level merely leave blanks which do not respond to the final associative search. If the addition of an entry causes a final page to overflow then the range covered by the record in the next higher node is partitioned according to some predefined rule, the old entry will have its lower limit raised to the new partition boundary, and a new record created for the lower part of the range. This new record can be in the next free space in the node-table. The entries in the old final page are searched in parallel using the new range of the new record in the next higher node and the entries which respond are transferred to a new final page leaving blanks in the old final page. This operation also takes less than 10 microseconds.

- 19 -                                    0170442

CLAIMS:

1. A method of searching for a selected value in a sparsely occupied database in which similar values are stored, using an associative array processor, the method using associative matching techniques characterised in the steps of selecting a portion of the database to be searched, concurrently searching records contained in said portion of the database, and identifying in the records the selected value or a pointer to another portion of the database within which the selected value should be located.

2. A method as claimed in claim 1, characterised in the step of concurrently searching includes a step of comparing the selected value with one or more values contained in each of the records.

3. A method as claimed in claim 2, characterised in that the step of comparing the selected value with one or more values stored in each record comprises the step of comparing the selected value with a maximum and a minimum value stored in each searched record.

4. A method as claimed in claim 3, characterised in that the step of comparing the maximum and minimum values of each record with the selected value comprises the steps of concurrently comparing the selected value with one of said maximum and minimum values of all records, using the results of said comparisons to identify selected ones of said records for further search, and comparing the selected value with the other of said maximum and minimum values of all selected records, whereby the selected value is identified or a pointer to another portion of the database is identified.

5. A method of organising a sparsely occupied database for storing a range of values in an associative array processor, the method characterised in the steps of partitioning the range of values to be stored into blocks, identifying for each block a set of upper and lower boundary values for the block, storing the sets as records in a table stored in the database, further partitioning the range of values contained within each of the blocks into sub-blocks, identifying the sets of values for the upper and lower boundaries of each of the sub-blocks, entering the sets of upper and lower boundary values of the sub-blocks of each prior block as records in a set of subsequent tables stored in the database, there being a subsequent table for each prior block, identifying the addresses of the subsequent tables, and entering the addresses of the subsequent tables into the corresponding records contained in the next higher table.

6. A method as claimed in claim 5, characterised in that additional sub-blocks are created along with additional sets of subsequent tables until there is sufficient storage for the values to be stored.

7. A method of searching for a selected value in a database organised as claimed in claim 5, characterised in the steps of comparing the selected value with all of the upper and lower boundary values stored in the records of the table, identifying the record wherein the upper boundary value is larger than and the lower boundary value is smaller than the selected value, identifying the address associated with the record, and addressing a subsequent table containing finer partitions of the previously identified block.

8. A method as claimed in claim 5, characterised in that the records in the table are placed in random sequence.

9. A method as claimed in claim 7, characterised in that additional values are stored in their proper sub-blocks by performing the searching process using the new values as the selected value and identifying the finest sub-block which does not contain the new value and adding the new value into that sub-block.

10. A method as claimed in claim 9, characterised in the additional steps of determining that the new value will not fit in the space available in the finest sub-block, creating a new sub-block having a new range of values equal to a portion of the range of values of the old sub-block, shifting the new values from the old sub-block to the new sub-block leaving the remaining values in the old sub-block, changing the range of values in the records of the next higher table to reflect their reduced range, and add new records to the next higher table for the new range of values including the address for the sub-block, whereby space becomes available for new values.

11. A data base arranged to operate in accordance with the method as claimed in any one of the preceding claims.

| POINTER TO LOWER | VALUE | POINTER TO VALUE FILE | POINTER TO HIGHER |
|---|---|---|---|

**FIG.1** TREE NODE FORMAT

| L | 170 | H |
|---|---|---|

**FIG.2a** FIRST NODE VALUE 170

| L | 170 | H |
|---|---|---|

| L | 128 | H |
|---|---|---|

**FIG.2b**
PLAIN TREE
SECOND NODE VALUE 128

| L | 170 | H |
|---|---|---|

| L | 128 | H |
|---|---|---|

| L | 66 | H |
|---|---|---|

**FIG.2c**
PLAIN TREE
THIRD NODE VALUE 66

| L | 170 | H |
|---|---|---|

| L | 128 | H |
|---|---|---|

| L | 192 | H |
|---|---|---|

| L | 66 | H |
|---|---|---|

**FIG.2d** PLAIN TREE FOURTH NODE
VALUE 192

| L | 170 | H |
|---|---|---|

| L | 128 | H |
|---|---|---|

| L | 192 | H |
|---|---|---|

| L | 66 | H |
|---|---|---|

| L | 15 | H |
|---|---|---|

**FIG.2e**

PLAIN TREE FIFTH NODE VALUE 15

FIG.3a FIRST NODE VALUE 170

FIG.3b
SECOND NODE VALUE 128

FIG.3c BALANCED (AVL) TREE THIRD NODE VALUE 66

FIG. 3d
BALANCED (AVL) TREE FOURTH NODE VALUE 192

FIG.3e
BALANCED (AVL) TREE FIFTH NODE VALUE 15

0170442

| A | PA | PAB | B | PB | PBC | C | PC |
|---|----|-----|---|----|-----|---|----|

WHERE A < B < C

AND PA = POINTER TO FIELD FOR VALUE A

PAB = POINTER TO NODE FOR VALUES BETWEEN A AND B

# FIG.4a

TYPICAL B-TREE NODE

| 15 | P 15 | P 15- 170 | 170 | P 170 | P 170- 192 | 192 | P 192 |
|----|------|-----------|-----|-------|------------|-----|-------|

| 66 | P 66 | P 66- 128 | 128 | P 128 | |
|----|------|-----------|-----|-------|--|

# FIG.4b

EXAMPLE SMALL B-TREE

FIG.5

INSTRUCTION
30
28
34
34
34
32
34
34
34
GENERAL PURPOSE 1-BIT PE ARRAY
MEMORY
36

FIG.7

VERTICAL BUS 316
UP
V MASK 312
302
H MASK 314
322
324
326
CELL 301
321
323
325
DOWN 304
HORIZONTAL BUS 318

4/13

0170442

0170442

TO/FROM ARRAY CONTROLLER

DATA     CONTROL     CONTROL

204

V MASK     312

206     N

V DATA     202

314  K     316  N     302/304

HM     HM     V     VM     U

H     NXK CELLULAR ARRAY     D R

L     A

212

210

318

N316

214     OUTPUT     321/322
323/324
325/326

216     218

ADDR.

208

## FIG.6

ASSOCIATIVE ARRAY PROCESSOR

| PAGE 1 /38 | PAGE 2 /40 | | PAGE 3 /42 |
|---|---|---|---|
| 16 DATA ELEMENTS A (16 BITS) | 16 DATA ELEMENTS B (10 BITS) | 16 DATA ELEMENTS C (6 BITS) | 16 POINTERS |

## FIG.8

0170442

FIG.9

0170442

204

| 1 | 1 | 1 | 1 | 1 | 1 | 1 | 1 | 1 | 1 | 1 | 1 | 1 | 1 | 1 | 1 | V. MASK

206

INPUT

H. MASK: 0 0 0 0 0 0 0 0 0 1 0 0 0 0 0 0 — 210

STATUS — 208

P0
P1
P2
P3
P4
P5
P6
P7
P8
P9
P10
P11
P12
P13
P14
P15

REG. 2

P9 — 216 — ADDRESS

FIG. 10

**MAX VALUE**

| Label | Value |
|-------|-------|
| A | |
| B | 1 |
| C | 2 |
| D | 3 |
| E | 4 |
| F | 5 |
| G | 6 |
| H | 7 |
| I | 8 |
| . | |
| . | |
| Q | |
| R | 19 |
| S | 20 |
| T | 21 |
| U | 22 |
| V | 23 |
| W | 24 |
| Z | 25 |

**MIN (ZERO) VALUE**

## FIG.11
RANGE TREE PARTITIONS

| SEARCH VALUE | H+ UPPER LIMIT OF RANGE VALUE | | H+ LOWER LIMIT OF RANGE VALUE | | POINTER |
|---|---|---|---|---|---|
| | + | E | + | F | P5 |
| | + | A | + | B | P1 |
| | + | C | + | D | P3 |
| | – | H | – | I | P8 |
| | + | B | + | C | P2 |
| | · · · | | · · · | | · · · |
| | – | L | – | M | P11 |
| | + | G | – | H | P7 |
| | – | V | – | W | P24 |
| | – | P | – | Q | P18 |

## FIG.12
NODE TABLE LAYOUT

V. MASK | 50 | 1 1 1 1 1 1 1 1 1 1 1 1 0 0 0 0 0 0 0 0 0 0 0 0 0 0 0 0 0 0 0 0

INPUT | 52 | SEARCH VALUE | NO CONSEQUENCE

31 30 29 28 27 26 25 24 23 22 21 20 19 18 17 16 15 14 13 12 11 10 9 8 7 6 5 4 3 2 1 0

UPPER LIMIT | LOWER LIMIT | POINTER

REG.9

ADDRESS

H.MASK

H. DATA/STATUS

56

54

**FIG.13**

SEARCHING FOR UPPER LIMIT GREATER THAN SEARCH VALUE

V MASK `0 0 0 0 0 0 0 0 0 0 0 0 | 1 1 1 1 1 1 1 1 1 1 1 1 | 0 0 0 0 0 0 0 0` — 50

INPUT | NO CONSEQUENCE | SEARCH VALUE | NO CONSEQUENCE | — 52

31 30 29 28 27 26 25 24 23 22 21 20 19 18 17 16 15 14 13 12 11 10 9 8 7 6 5 4 3 2 1 0

UPPER LIMIT | LOWER LIMIT | POINTER — 54

REG.9

H. MASK `1 1 0 1 0 1 1 0` — 56

H. DATA/STATUS `0 0 0 0 0 1 0 0`

ADDRESS

FIG.14

SEARCHING FOR LOWER LIMIT LESS THAN SEARCH VALUE

0170442

V MASK | 0 0 0 0 0 0 0 0 0 0 0 0 | 0 0 0 0 0 0 0 0 0 0 0 0 | 1 1 1 1 1 1 1 1

50

INPUT

52

31 30 29 28 27 26 25 24 23 22 21 20 19 18 17 16 15 14 13 12 11 10 9 8 7 6 5 4 3 2 1 0

| UPPER LIMIT | LOWER LIMIT | POINTERS |
| | | |
| | | |
| | | |
| | | POINTER 6 |
| | | |
| | | |

REG. 9

H. MASK | 0 0 0 0 0 1 0 0

56

H. DATA/STATUS

54

ADDRESS | POINTER 6

58

# FIG. 15

READING OUT POINTER FOR NEXT NODE

PAGE 1

| UPPER BOUNDARY OF RANGE | MOST SIGNIFICANT BITS OF POINTER |
|---|---|

PAGE 2

| LOWER BOUNDARY OF RANGE | LEAST SIGNIFICANT BITS OF POINTER |
|---|---|

# FIG. 16

AN EXAMPLE OF A TWO PAGE NODE TABLE

0170442

DIRECTORY TABLE SIZE

ONE OUT OF 32
SEARCH SCOPE $2^{24}$
TIME < 10$\mu$s

32 ········→ 2 PAGES = 32 ELEMENTS
= 64 BITS/ELEMENTS

ONE OUT OF 1024
SEARCH SCOPE $2^{28}$
TIME< 20$\mu$s

32 ········→ 64 PAGES

ONE OUT OF 32,768
SEARCH SCOPE $2^{32}$
TIME< 30$\mu$s

32 ········→ 2048 PAGES

ONE OUT OF 1,048,576
SEARCH SCOPE $2^{36}$
TIME< 40$\mu$s

32 ········→ 65, 536 PAGES

ONE OUT OF 33,554,432
SEARCH SCOPE $2^{40}$
TIME< 50$\mu$s

32 ········→

# FIG.17

RELATION BETWEEN TREE DEPTH, SEARCH SCOPE, AND DIRECTORY SIZE